(19) Europäisches Patentamt
European Patent Office
Office européen des brevets

(11)  **EP 4 095 747 A1**

(12)  **EUROPEAN PATENT APPLICATION**

(43) Date of publication:
**30.11.2022 Bulletin 2022/48**

(21) Application number: **21176537.5**

(22) Date of filing: **28.05.2021**

(51) International Patent Classification (IPC):
**G06K 9/62** (2022.01)      **G06K 9/32** (2006.01)
**G06K 9/00** (2022.01)

(52) Cooperative Patent Classification (CPC):
**G06K 9/6256; G06K 9/627; G06V 10/255;
G06V 20/10; G06V 20/64**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED**
**Kanagawa 211-8588 (JP)**

(72) Inventors:
• **MYKHASKIV, Orest**
  **London, E14 7JZ (GB)**

• **CHAULET, Nicolas**
  **London, N1 9UU (GB)**
• **GEORGESCU, Serban**
  **London, W13 8NH (GB)**

(74) Representative: **Haseltine Lake Kempner LLP**
**Cheapside House
138 Cheapside
London EC2V 6BJ (GB)**

Remarks:
Amended claims in accordance with Rule 137(2)
EPC.

(54) **AUTOMATIC SEARCH AND DETECTION**

(57)      A computer-implemented method of training an object detection model to search for a 3D query object comprises providing a 3D representation of a 3D training scene comprising annotated 3D objects of a training class, providing a 3D point-cloud representation of a 3D training object belonging to the training class, wherein the 3D training scene and the 3D training object belong to a scene-shape pair corresponding to the training class, using the object detection model, generating feature descriptors of the 3D representation of the 3D training scene and of the 3D representation of the 3D training object, and combining the feature descriptors of the 3D training scene and of the 3D training object to detect at least one 3D object in the 3D training scene, outputting at least one bounding volume around the at least one detected 3D object, and computing at least one shape similarity score for the at least one detected 3D object, each shape similarity score indicating a similarity between a detected 3D object and the 3D training object, and training the object detection model to output the at least one bounding volume to maximize a shape similarity score for a bounding volume around a said annotated 3D object of the training class and to minimize a shape similarity score for a bounding volume around any other detected 3D object.

Figure 1

EP 4 095 747 A1

**Description**

The present invention relates to automatic search and detection, and in particular to an automatic search and detection method, a computer program, and an information processing apparatus.

The task in object classification is to assign a known category/class to a single object appearing in a two-dimensional (2D) or three-dimensional (3D) image. In an object detection task, which is more challenging, typically one needs to localise several objects in an image, while also assigning them multiple known classes.

The problems of object classification and detection have been extensively researched by the Computer Vision community. Both object classification and detection were addressed with traditional methods before recent breakthroughs in Machine/Deep Learning (ML/DL). Traditional methods are often based on various hand-crafted descriptors designed to recognise particular features in images, such as landmarks on human faces, shape boundaries/edges, etc. Here, "hand-crafted descriptors" means filters or processes that are manually created by an operator (a human) to detect certain types of patterns that may be correlated with e.g. defects. Such hand-crafted features are used in "traditional" Artificial Intelligence (AI) - i.e. not DL - and are usually fed into a simple AI model (e.g. a linear classifier, a shallow neural network, etc.) in order to predict e.g. whether an object has defects or not.

In DL methods, objects are also detected based on their feature descriptors, but the features are learned by neural networks automatically from annotated image data, rather than designed based on a heuristic. The annotated image usually contains bounding boxes around the objects, along with their class labels. Several well-established open datasets and benchmarks for object classification and detection are available. Compared to traditional methods, DL approaches such as Faster R-CNN (described in "Faster R-CNN, Towards real-time object detection with region proposal networks", by S Ren et al, available at https://arxiv.org/abs/1506.01497) and YOLO (described in "YOLOv4: Optimal Speed and Accuracy of Object Detection", by Bochkovskiy et al, available at https://arxiv.org/abs/2004.10934) demonstrate significantly higher accuracy for 2D object detection and are often adopted for practical use. Similarly, for 3D data, a number of DL approaches have been proposed: methods for learning on point clouds (PointNet++ (described in "PointNet++: Deep Hierarchical Feature Learning on Point Sets in a Metric Space", by Qi et al, available at https://arxiv.org/abs/1706.02413) for classification, and VoteNet (described in "Deep Hough Voting for 3D Object Detection in Point Clouds", by Qi et al, available at https://arxiv.org/abs/1904.09664) for detection); and methods which convert 3D data to voxels, 2D bird's eye or projection-based views, and rely on the 2D detectors.

The accuracy of DL methods depends significantly on the amount and quality of data used during training. Contrary to the human ability to generalise and detect new objects based on just a single or handful of examples ("one-shot" or "few-shot" learning), the DL detection techniques described above face difficulties when locating unseen/unannotated object classes. Several works address the problem of "few-shot" classification with metric learning in the context of 2D images, in which a neural network learns a similarity function between pairs of objects of the same class (e.g. a query and a target object in a 2D image), and then, during inference, the neural network is able to generalise the predictions to pairs of objects from unseen classes. In "One-Shot Object Detection with Co-Attention and Co-Excitation" (by Ting-I Hsiehe et al, available at https://arxiv.org/abs/1911.12529), the authors propose a "one-shot" object detection architecture for 2D image data, in which the architecture learns to detect and emphasize similarities between query features and corresponding objects in 2D images.

3D Shape Search and Retrieval systems, e.g. "Method and Apparatus for Searching a Database of 3D Items Using Descriptors" (by Serban Georgescu et al, available at shorturl.at/ctCX5) and "Methods and Systems for 3D Shape Retrieval" (by Ameesh Makadia et al, available at https://patentimages.storage.googleapis.eom/34/b5/25/6307b5a5a20b45/US8606774.p df), address the problem of finding a query shape in databases (DBs) of objects. These systems follow object classification methods without localisation tasks, as each database entry contains only a single object. The procedure in these systems is often based on the generation of feature descriptors (using traditional or DL techniques) for the query and DB objects, and the DB objects with the most similar descriptors to the query are then selected as the search results. The models in these systems require re-training to be capable of retrieving objects from unseen classes.

Previous 3D object detection methods and systems are unable to work in "one-shot" and "few-shot" settings. This poses a severe limitation, as the previous (e.g. DL) methods are not capable of querying objects from a previously unseen class (i.e. they are not capable of detecting a query object belonging to a class that the model has not been specifically trained on). Therefore using previous methods and systems for querying objects from a previously unseen class requires a user to first annotate the training dataset with the new class labels and then re-train the models, which is a substantial effort and a drawback of the previous methods and systems.

It is desirable to provide an improved automatic search and detection method (may be herein referred to an object detection method) in light of the above.

According to an embodiment of a first aspect there is disclosed herein a computer-implemented method of training an object detection model to search for a 3D query object (in a 3D query scene), the method comprising: providing a 3D representation of a 3D training scene comprising annotated 3D objects of (belonging to) a training class (the annotated 3D objects comprising annotations); providing a 3D representation of a 3D training object belonging to the training class, wherein the 3D training scene (which comprises a plurality of 3D objects) and the 3D training object belong to a scene-shape pair corresponding to the training class; using the object detection model, generating feature descriptors of the 3D representation of the 3D training scene and of the 3D representation of the 3D training object (or generating a (training) scene feature descriptor of the 3D representation of the 3D training scene and a (training) object feature descriptor of the 3D representation of the 3D training object), and combining the feature descriptors of the 3D training scene and of the 3D training object to detect at least one 3D object in the 3D training scene, outputting at least one bounding volume around the at least one detected 3D object (respectively), and computing at least one (a) shape similarity score for the at least one detected 3D object (respectively), each shape similarity score indicating a similarity between a detected 3D object and the 3D training object; and training the object detection model to output the at least one bounding volume to maximize a shape similarity score for a bounding volume around a said annotated 3D object of the training class and to minimize a shape similarity score for a bounding volume around any other detected 3D object.

Embodiments provide 3D shape search and retrieval for object detection (localisation and classification of multiple objects within a scene) in a "one-shot" setting.

Embodiments may achieve the following advantages, among others:

- 3D shape search and retrieval, where the query is a part of a larger 3D scene containing multiple objects (as in object detection).

- Ability to detect 3D query and query-like objects of previously unannotated (unseen) classes ("one-shot" setting), i.e. detecting a query (or query-like) object belonging to a class that the model has not been trained on. In other words, an embodiment may achieve detection of 3D objects not annotated in training datasets: the object detection model of the embodiment needs to be trained only once. The same model can be quickly set up and used to detect different objects (of previously unseen classes - i.e. classes that the model has not been trained on) in multiple (e.g. customer-specific) applications. In comparison to typical known deep learning (DL) object detection techniques, this significantly saves the resources required to annotate the datasets with new object classes before using the model.

- Ability to handle the query search for classes with substantial shape variation (i.e. when the 3D query object given as an example (for the search) does not perfectly match the target objects in the scene). In other words, unlike other object detection methodologies, a method according to an embodiment allows for large shape variations (a threshold for shape similarity may be set accordingly, as described later). This is beneficial during search operations in mechanical computer aided design (CAD), where due to both functional and aesthetic constrains, significant shape variation between the features from the same class is likely to occur.

Embodiments may be used in cases where there is a necessity to find and locate particular 3D objects (e.g. existing CAD parts, features (or sections) of the CAD parts, or physical items) within a collection of large 3D scenes. Examples of such cases include:

- Searching for a CAD part in a collection of existing 3D CAD models. During design of a new electronic component (e.g. CAD model of a laptop), previously designed CAD models and their parts can be re-used. The search and detection process can facilitate design knowledge transfer.

- In the context of automated design rule checks, specific geometric features need to be located in order for various geometric constraints (e.g. clearance, penetration) to be computed. For example, in the case of an electronic product, in order to automatically check correct penetration of screws into bosses, a system would first need to automatically locate all the screws and the bosses.

- In various inventory tasks, one often needs to detect specific assets in 3D scans.

More broadly, embodiments may be applied in situations where visual detection, inspection or quality control of 3D (e.g. CAD) models and/or scans is required.

The 3D representation of the 3D training object may be a 3D point-cloud representation of the 3D training object. The 3D representation of the 3D training scene may be a 3D point-cloud representation of the 3D training scene.

Any bounding volume may be (referred to as) a bounding box.

The 3D objects of the training class in the 3D training scene may or may not include the 3D training object.

The 3D training scene may comprise no annotations corresponding to 3D objects belonging to classes other than the training class.

The 3D query object may belong to a class different to the training class.

The generation of the feature descriptors may be performed using a 3D neural network, or using a feature descriptor generation module of the object detection model, implemented by a 3D neural network.

The combining of the feature descriptors may be performed using a non-local network, or a correlation module of the object detection model, implemented by a non-local network.

The feature descriptors may be combined to generate at least one combined feature descriptor, and the method may comprise using the object detection model to process the combined feature descriptor to detect the at least one 3D object in the 3D scene and calculate the at least one shape similarity score.

The processing of the combined feature descriptor may be performed using another 3D neural network, or using a detection module of the object detection model, implemented by a 3D neural network.

Generating the feature descriptors may comprise: extracting local features from small neighborhoods/regions of the 3D representation of the 3D training scene and combining them to produce higher-level feature descriptors (to produce a (training) scene feature descriptor); and extracting local features from small neighborhoods/regions of the 3D representation of the 3D training object and combining them to produce higher-level feature descriptors (to produce a (training) object feature descriptor).

Generating the feature descriptors may comprise: compressing the 3D representation of the 3D training scene into a (training) scene feature descriptor; and compressing the 3D representation of the 3D training object into a (training) object feature descriptor.

Each feature descriptor may be a matrix.

The feature descriptors may comprise a (training) scene feature descriptor corresponding to the 3D training scene and comprising scene features of the 3D training scene, and an (training) object feature descriptor corresponding to the 3D training object and comprising object features of the 3D training object. Combining the feature descriptors may comprise computing relationships between each feature of the (training) scene feature descriptor with the features of the (training) object feature descriptor to produce the combined (training) feature descriptor, each entry of which is computed as a weighted sum of the scene and object features at all positions. Weights of the weighted sum may be learnable.

Detecting at least one 3D object in the 3D training scene may comprise using another 3D neural network to process the combined (training) feature descriptor.

The 3D training object (and/or the 3D training scene) may be a manufactured product. The method may comprise obtaining the 3D representation of the 3D training object (and/or the 3D training scene) using 3D scanning hardware such as structured light sensors, time-of-flight sensors, light detection and ranging, LiDAR, cameras, or a plurality of cameras in combination with photogrammetry. The method may comprise using multiple 3D scans of the 3D training object (and/or the 3D training scene) to obtain multiple 3D point-cloud representations and merging the multiple 3D point-cloud representations together using point-cloud registration.

The method may comprise converting a 3D representation of the 3D training object into the 3D point-cloud representation of the 3D training object, optionally by sampling surfaces (boundaries) of at least one (computer aided design, CAD) model of the 3D training object.

The method may comprise converting a 3D representation of the 3D training scene into the 3D point-cloud representation of the 3D training scene, optionally by sampling surfaces (boundaries) of a (computer aided design, CAD) model of the 3D training scene, optionally using the same or similar (or substantially the same or substantially similar) conversion parameters as used in the conversion of the model of the 3D training object to the 3D point-cloud representation of the 3D training object.

According to an embodiment of a second aspect there is disclosed herein a computer-implemented method of training an object detection model to search for a 3D query object in a 3D query scene, the method comprising iterating the method according to the first aspect for a plurality of scene-shape pairs, the plurality of scene-shape pairs comprising at least a first scene-shape pair corresponding to a first training class and a second scene-shape pair corresponding to a second training class.

In other words, there is disclosed herein a method of training an object detection model to detect a 3D query object in a 3D query scene, the method comprising, for each of a plurality of scene-shape pairs comprising at least a first scene-shape pair corresponding to a first training class and a second scene-shape pair corresponding to a second training class, each scene-shape pair comprising a 3D training scene (comprising a plurality of 3D objects) and a 3D training object belonging to the corresponding training class: providing a 3D representation of the 3D training scene comprising annotated 3D objects of the corresponding training class (the annotated 3D objects comprising annotations); providing a 3D representation of the 3D training object belonging to the corresponding training class; generating feature descriptors of the 3D representation of the 3D training scene and of the 3D representation of the 3D training object (or generating a (training) scene feature descriptor of the 3D representation of the 3D training scene and a (training) object feature descriptor of the 3D representation of the 3D training object); combining the feature descriptors of the 3D training scene and of the 3D training object to detect at least one 3D object in the 3D training scene, outputting at least one bounding volume around the at least one detected 3D object (respectively), and computing at least one (a) shape similarity score for the at least one detected 3D object (respectively), each similarity score indicating a similarity between a detected 3D object and the 3D training object; and training the object detection model to output the at least one bounding volume to maximize a shape similarity score for a bounding volume around a said annotated 3D object of the training class and to minimize a shape similarity score for a bounding volume around any other detected 3D object.

The 3D representation of any 3D training object and/or any 3D training scene may be a 3D point-cloud representation.

Any bounding volume may be (referred to as) a bounding box.

The first scene-shape pair may comprise a first 3D scene with annotations for 3D objects of the first training class, and the second scene-shape pair may comprise the first 3D scene with annotations for 3D objects of the second training class.

The first training class may be different from the second training class.

The 3D training scene may comprise no annotations corresponding to 3D objects belonging to classes other than the (first and second) training classes.

The 3D query object may belong to a class different to the (first and second) training classes.

According to an embodiment of a third aspect there is disclosed herein a computer program which, when run on a computer, causes the computer to train an object detection model to search for a 3D query object (in a 3D query scene) by: providing a 3D representation of a 3D training scene comprising annotated 3D objects of a training class (the annotated 3D objects comprising annotations); providing a 3D representation of a 3D training object belonging to the training class, wherein the 3D training scene (which comprises a plurality of 3D objects) and the 3D training object belong to a scene-shape pair corresponding to the training class; using the object detection model, generating feature descriptors of the 3D representation of the 3D training scene and of the 3D representation of the 3D training object (or generating a (training) scene feature descriptor of the 3D representation of the 3D training scene and a (training) object feature descriptor of the 3D representation of the 3D training object), and combining the feature descriptors of the 3D training scene and of the 3D training object to detect at least one 3D object in the 3D training scene, outputting at least one bounding volume around the at least one detected 3D object (respectively), and computing at least one (a) shape similarity score for the at least one detected 3D object (respectively), each shape similarity score indicating a similarity between a detected 3D object and the 3D training object; and training the object detection model to output the at least one bounding volume to maximize a shape similarity score for a bounding volume around a said annotated 3D object of the training class and to minimize a shape similarity score for a bounding volume around any other detected 3D object.

According to an embodiment of a fourth aspect there is disclosed herein an information processing apparatus comprising a memory and a processor connected to the memory, wherein the processor is configured to train an object detection model to search for a 3D query object (in a 3D query scene) by: providing a 3D representation of a 3D training scene comprising annotated 3D objects of a training class (the annotated 3D objects comprising annotations); providing a 3D representation of a 3D training object belonging to the training class, wherein the 3D training scene (which comprises a plurality of 3D objects) and the 3D training object belong to a scene-shape pair corresponding to the training class; using the object detection model, generating feature descriptors of the 3D representation of the 3D training scene and of the 3D representation of the 3D training object (or generating a (training) scene feature descriptor of the 3D representation of the 3D training scene and a (training) object feature descriptor of the 3D representation of the 3D training object), and combining the feature descriptors of the 3D training scene and of the 3D training object to detect at least one 3D object in the 3D training scene, outputting at least one bounding volume around the at least one detected 3D object (respectively), and computing at least one (a) shape similarity score for the at least one detected 3D object (respectively), each shape similarity score indicating a similarity between a detected 3D object and the 3D training object; and training the object detection model to output the at least one bounding volume to maximize a shape similarity score for a bounding volume around a said annotated 3D object of the training class and to minimize a shape similarity score for a bounding volume around any other detected 3D object.

The object detection model and/or the scene-shape pair may be stored in the memory.

According to an embodiment of a fifth aspect there is disclosed herein a computer-implemented method of searching for a 3D (3-dimensional) query object in a 3D scene, the method comprising, using a trained object detection model: generating feature descriptors of a 3D representation of the 3D scene (comprising a plurality of 3D objects) and of a 3D representation of the 3D query object (or generating a scene feature descriptor of the 3D representation of the 3D scene and a query feature descriptor of the 3D representation of the 3D query object); and combining the feature descriptors of the 3D scene and of the 3D query object to detect at least one 3D object in the 3D scene and computing at least one (a) shape similarity score for the at least one 3D object detected in the 3D scene (respectively), each similarity score indicating a similarity between a detected 3D object and the 3D query object.

The 3D representation of the 3D query object may be a 3D point-cloud representation of the 3D query object. The 3D representation of the 3D scene may be a 3D point-cloud representation of the 3D scene.

The object detection model may have been trained according to the first aspect. In other words, the method may comprise, prior to searching for the 3D query object in the 3D scene, training the object detection model according to the method of training the object detection model according to the first aspect.

The 3D query object (and/or the 3D scene) may be a manufactured product.

The method may comprise obtaining the 3D representation of the 3D query object (and/or the 3D scene) using 3D scanning hardware such as structured light sensors, time-of-flight sensors, light detection and ranging, LiDAR, cameras, or a plurality of cameras in combination with photogrammetry. The method may comprise using multiple 3D scans of the 3D query object (and/or the 3D scene) to obtain multiple 3D point-cloud representations and merging the multiple 3D point-cloud representations together using point-cloud registration.

The method may comprise converting a 3D representation of the 3D query object into the 3D point-cloud representation of the 3D query object, optionally by sampling surfaces (boundaries) of at least one (computer aided design, CAD) model of the 3D query object.

The method may comprise converting a 3D representation of the 3D scene into the 3D point-cloud representation of the 3D scene, optionally by sampling surfaces (boundaries) of a (computer aided design, CAD) model of the 3D scene, optionally using the same or similar (or substantially the same or substantially similar) conversion parameters as used in the conversion of the model of the 3D query object to the 3D point-cloud representation of the 3D query object.

The generation of the feature descriptors may be performed using a (trained) 3D neural network, or using a (trained) feature descriptor generation module of the trained object detection model, implemented by a (trained) 3D neural network.

The combining of the feature descriptors may be performed using a (trained) non-local network, or using a (trained) correlation module of the trained object detection model, implemented by a (trained) non-local network.

The feature descriptors may be combined to generate at least one combined feature descriptor, and the method may comprise using the trained object detection model to process the combined feature descriptor to detect the at least one 3D object in the 3D scene and calculate the shape similarity score for the at least one detected 3D object.

The processing of the combined feature descriptor may be performed using a (trained) 3D neural network, or using a (trained) detection module of the trained object detection model, implemented by a (trained) 3D neural network.

Generating the feature descriptors may comprise: extracting local features from small neighborhoods/regions of the 3D representation of the 3D scene and combining them to produce higher-level feature descriptors (to produce a scene feature descriptor); and extracting local features from small neighborhoods/regions of the 3D representation of the 3D query object and combining them to produce higher-level feature descriptors (to produce a query feature descriptor).

Generating the feature descriptors may comprise: compressing the 3D representation of the 3D scene into a scene feature descriptor; and compressing the 3D representation of the 3D query object into a query feature descriptor.

Each feature descriptor may be a matrix.

The feature descriptors may comprise a scene feature descriptor corresponding to the 3D scene and comprising scene features of the 3D scene, and a query feature descriptor corresponding to the 3D query object and comprising query features of the 3D query object.

Combining the feature descriptors may comprise (using the (trained) correlation module) computing relationships between each feature of the scene feature descriptor with the features of the query feature descriptor to produce a combined feature descriptor, each entry of which is computed as a weighted sum of the scene and query features at all positions. Weights of the weighted sum may be learnable.

The method may comprise, when a shape similarity score for a said detected 3D object is above a threshold value, outputting a determination that the 3D query object (or a 3D query-like object) is present in the scene.

The method may comprise outputting the location (coordinates) of the at least one 3D object detected in the scene (with a shape similarity score above the threshold value) and the shape similarity score for the at least one 3D object detected in the scene.

The method may comprise outputting a visual representation of the 3D scene with at least one bounding volume around the at least one 3D object detected in the 3D scene (respectively) (with a shape similarity score above a threshold value), and outputting the shape similarity score for the at least one 3D object detected in the scene.

The method may comprise, when a plurality of 3D objects is detected in the 3D scene, outputting a visual representation of the 3D scene with a bounding volume around each 3D object detected in the 3D scene (with a shape similarity score above the threshold value), and outputting the shape similarity score for each 3D object detected in the scene.

A 3D object detected in the 3D scene may not be included in the output if the shape similarity score for the 3D object detected in the 3D scene is below or equal to the threshold value.

The output may be in the form of an inspection report.

The 3D query object may belong to a class of objects upon which the trained correlation module has not been trained. In other words, the trained correlation module may not have been trained on the class of objects to which the query object belongs.

The 3D query object may be a first 3D query object and each shape similarity score may be a first shape similarity score, and the method may comprise, using the trained object detection module: generating a feature descriptor (or feature descriptors) of a second 3D query object; and combining the feature descriptors of the 3D scene and of the second 3D query object to detect at least one 3D object in the 3D scene and computing at least one second shape similarity score for the at least one 3D object detected in the 3D scene (respectively), each second shape similarity score indicating a similarity between a detected 3D object and the second 3D query object.

The method may comprise, if the first shape similarity score for a said detected 3D object is above a first threshold value, outputting a determination that the first 3D query object (or a first 3D query-like object) is present in the scene, and if the second shape similarity score for a said detected 3D object is equal to or above a second threshold value, outputting a determination that the second 3D query object (or a second 3D query-like object) is present in the scene.

The method may comprise outputting the location (coordinates) of the at least one 3D object detected in the scene and the first and/or second shape similarity score for the at least one 3D object detected in the scene.

The method may comprise outputting a visual representation of the 3D scene with at least one bounding volume around the at least one 3D object detected in the 3D scene (respectively) (with a first and/or second shape similarity score above the corresponding threshold value), and outputting the first and/or second shape similarity score for the at least one 3D object detected in the scene, and outputting information indicating whether the at least one detected 3D object corresponds to the first or the second 3D query object.

The method may comprise, when a plurality of 3D objects are detected in the 3D scene, outputting a visual representation of the 3D scene with a bounding volume around each 3D object detected in the 3D scene (with a first and/or second shape similarity score above the corresponding threshold value), and outputting the first and/or second shape similarity score for each 3D object detected in the scene, and outputting information indicating whether each detected 3D object corresponds to the first or the second 3D query object.

A 3D object detected in the 3D scene may not be included in the output as corresponding to the first 3D query object if the first shape similarity score for the 3D object detected in the 3D scene is below or equal to the first threshold value, and the 3D object detected in the 3D scene may not be included in the output as corresponding to the second 3D query object if the second shape similarity score for the 3D object detected in the 3D scene is below or equal to the second threshold value.

The method may comprise computing the relative locations of the detected 3D objects.

The (or each) 3D query object may belong to a class of objects upon which the trained object detection model has not been trained. In other words, the trained object detection model may not have been trained on the class of objects to which the (or each) 3D query object belongs.

The first 3D query object may be a nail or a screw and the second 3D query object may be a boss, and the method may comprise: determining that a first detected 3D object is the first 3D query object if the first shape similarity score for the first detected 3D object (its first shape similarity score) is above a first threshold value, and determining that a second detected 3D object is the second 3D query object if the second shape similarity score for the second detected 3D object (its second shape similarity score) is above a second threshold value; and determining the relative locations of the first and second detected 3D objects to determine whether each nail or screw in the scene correctly penetrates a boss.

The method may comprise outputting a determination of whether each nail or screw correctly penetrates a boss.

The method may comprise outputting a visual representation of the 3D scene with bounding volumes around the detected 3D objects determined to be the first and second 3D query objects (a nail/screw and a boss), and information indicating which screws or nails do not correctly penetrate a boss.

According to an embodiment of a sixth aspect there is disclosed herein a computer-implemented method of searching for a 3D query object in a plurality of 3D scenes, the method comprising iterating the method according to the fifth aspect for each of the plurality of 3D scenes.

The method may comprise, for a detected 3D object with a shape similarity score equal to or above a threshold value, outputting a determination that the 3D query object (or a 3D query-like object) is present in the 3D scene in which the said 3D object was detected.

The method may comprise, for a detected 3D object with a shape similarity score equal to or above a threshold value, outputting a visual representation of the at least one 3D scene in which the at least one 3D object is detected with at least one bounding volume around the at least one detected 3D object (respectively), with the shape similarity score for the (or each) at least one detected 3D object.

According to an embodiment of a seventh aspect there is disclosed herein a computer program which, when run on a computer, causes the computer to search for a 3D query object in a 3D scene by, using a trained object detection model: generating feature descriptors of a 3D representation of the 3D scene (comprising a plurality of 3D objects) and of a 3D representation of the 3D query object (or generating a scene feature descriptor of the 3D representation of the 3D scene and a query feature descriptor of the 3D representation of the 3D query object); and combining the feature descriptors of the 3D scene and of the 3D query object to detect at least one 3D object in the 3D scene and computing at least one (a) shape similarity score for the at least one 3D object detected in the 3D scene (respectively), each similarity score indicating a similarity between a detected 3D object and the 3D query object.

According to an embodiment of an eighth aspect there is disclosed herein an information processing apparatus comprising a memory and a processor connected to the memory, wherein the processor is configured to search for a 3D query object in a 3D scene by, using a trained object detection model: generating feature descriptors of a 3D representation of the 3D scene (comprising a plurality of 3D objects) and of a 3D representation of the 3D query object (or generating a scene feature descriptor of the 3D representation of the 3D scene and a query feature descriptor of the 3D representation of the 3D query object); and combining the feature descriptors of the 3D scene and of the 3D query object to detect at least one 3D object in the 3D scene and computing at least one (a) shape similarity score for the at least one 3D object detected in the 3D scene (respectively), each similarity score indicating a similarity between a detected 3D object and the 3D query object.

Features relating to an aspect may be applied to any other aspect/embodiment. Features relating to the first and second (method) aspects may be applied to the third and/or fourth (computer program and apparatus) aspects. Features relating to the fifth and sixth (method) aspects may be applied to the seventh and/or eighth (computer program and apparatus) aspects. The computer program of the third/seventh aspect may cause the computer to perform any of the method steps of the first and second/fifth and sixth aspects. The processor of the fourth/eighth aspect may be configured to perform any of the method steps of the first and second/fifth and sixth aspects.

Reference will now be made, by way of example, to the accompanying drawings, in which:

Figure 1 is a diagram of an overview of an operation of an information processing apparatus;
Figure 2 is a diagram of an object detection method;
Figure 3 is a schematic illustration of a 3D training scene;
Figure 4 is a diagram of a scene-shape annotated dataset;
Figure 5 is a diagram of an object detection process useful for understanding a method according to an embodiment;
Figure 6 is a diagram of object detection architecture;
Figure 7 is a diagram useful for understanding the present disclosure;
Figure 8 is a diagram useful for understanding the present disclosure; and
Figure 9 is a diagram of an information processing apparatus.

This disclosure describes automatic search and detection processes. Embodiments allow a user to check whether a 3D query object can be found in a 3D scene, or in a scene database (DB) in which a plurality of 3D scenes may be stored. A scene may be a 3D model (e.g. a computer aided design (CAD) model) or a 3D scan of a physical object. A user may provide one or a plurality of 3D query objects. The 3D query object may be a 3D model (e.g. a CAD model) or a 3D scan of a physical object, or a part of such a 3D model or scan.

An embodiment may inspect if the 3D query object belongs to a 3D scene and indicate its location within it. The embodiment is based on a shape similarity computation between the 3D query object and the 3D scene parts.

The embodiment may output an inspection report. The inspection report may list 3D scenes that contain query or query-like objects with the corresponding calculated shape similarity and location information. Multiple query search results can be used separately or combined into a single inspection report.

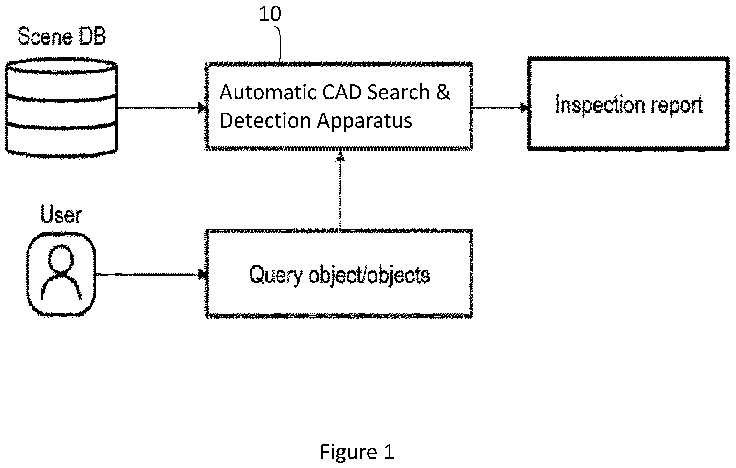

Figure 1 shows an operation of an information processing apparatus (Automatic CAD search and detection apparatus) 10 according to an example arrangement.

The apparatus 10 works in the following way according to the example arrangement:

1. A user provides the apparatus 10 with a 3D query object to detect in the Scene DB (database).
2. The Scene DB and 3D query object are converted into a 3D point-cloud format/representation.
3. The presence, shape similarity, and location of the 3D query object in the Scene DB is computed by a "one-shot" object detection method.
4. An inspection report is generated based on the results of the detection method.
5. The inspection report may be processed to locate particular 3D objects corresponding to the 3D query objects, and/or to compute relative positions and other distance-based characteristics of 3D objects in the 3D scenes of the Scene DB.
6. The procedure may be repeated with other queries (i.e. with other 3D query objects).

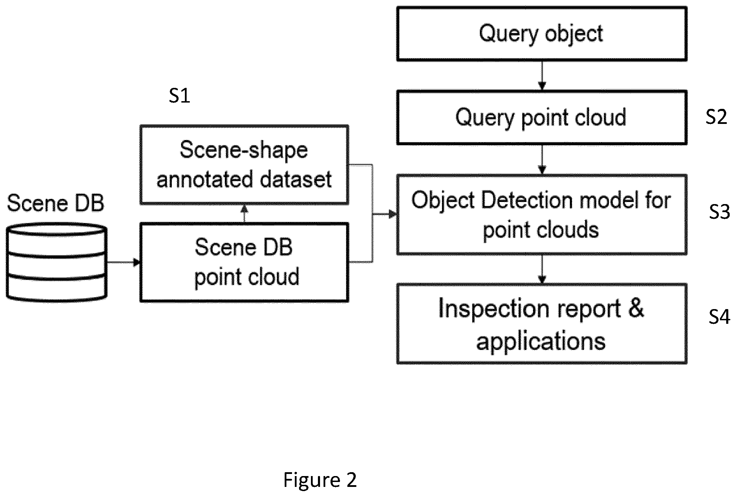

A high-level overview of a method (object detection method) which may be performed by the apparatus 10 according to an example arrangement is shown in Figure 2.

First, at step S1 a scene-shape annotated dataset is constructed for training a one-shot 3D object detection model for point clouds (or simply an object detection model). The scene-shape annotated dataset contains pairs of scene-shape point-clouds (which may be referred to as scene-shape pairs) each corresponding to a training class and comprising a 3D training scene (comprising a plurality of 3D objects) and a 3D training object belonging to the training class corresponding to that pair. The 3D training scenes in the scene-shape annotated dataset are annotated only for the objects of the corresponding training class. For example, the scene-shape annotated dataset may comprise a first scene-shape pair corresponding to a first training class and a second scene-shape pair corresponding to a second training class, the first scene-shape pair comprising a first 3D training object belonging to the first training class and a first 3D training scene comprising annotations for 3D objects of the first training class, and the second scene-shape pair comprising a second 3D training object belonging to the second training class and a second 3D training scene comprising annotations for 3D objects of the second training class. The first and second 3D training objects may be the same or different, and the first and second 3D training scenes may be the same or different. The 3D training scenes and 3D training objects are stored as/converted into point-cloud representations.

Also in step S1, the scene-shape annotated dataset is provided to the object detection model and the object detection model is trained on the scene-shape annotated dataset to detect scene parts based on similarity with the given shape, that is to detect 3D objects in a 3D training scene based on similarity with a 3D training object. The scene-shape dataset can be created from the Scene DB (if annotated) as shown in Figure 2 or any other object detection dataset. The training of the object detection model is described in more detail later.

In step S2 a 3D query object (i.e. the 3D object which the apparatus 10 will search for in a 3D scene) is provided as or converted into a point-cloud representation. In step S3 the point-cloud representation of the 3D query object is provided to the trained object detection model. The 3D scenes in the scene DB are stored as or converted into point-cloud representations and in step S3 are provided to the trained object detection model. The trained object detection model locates query-like objects within the 3D scenes in the Scene DB. The 3D query object does not need to belong to the training classes seen during the training of the object detection model. During step S3, the trained object detection model computes shape similarity scores for detected 3D objects, each shape similarity score indicating a similarity between a detected 3D object and the 3D query object.

After the detection stage in step S3, in step S4 an inspection report is output. The inspection report may list matching 3D scenes, that is 3D scenes in which the 3D query object or a 3D object sufficiently similar to the 3D query object (a query-like object) was detected in step S3. For each matching 3D scene, or for each 3D scene, the inspection report may include bounding volumes (hereinafter referred to as bounding boxes) of detected 3D objects, their relative positions in 3D space, and the shape similarity score for each detected 3D object. The information in the inspection report, i.e. the results of step S3, may be used in a customer-specific application.

The operation of the apparatus 10 and the method may not comprise all of the steps described above and illustrated in Figures 1 and 2. For example, the scene-shape dataset may be provided to the apparatus 10 for the method instead of being constructed. The object detection model may be pre-trained to be used by the apparatus 10 in the method instead of being trained by the apparatus 10 as part of the method. The object detection model may be trained separately by another apparatus and as part of another method. The training of the model is described in more detail later. Furthermore, the inspection report may not be output. Furthermore, the operation/method described above may relate to a single 3D scene rather than a plurality of 3D scenes in the scene DB (that is, a 3D query object may be searched for in a single 3D scene rather than a plurality of 3D scenes). Furthermore, the 3D scenes may be provided to the model but may not be stored in the scene DB. Furthermore, the 3D representation of the 3D query object and/or of any 3D scene and/or any 3D object may not be a point-cloud representation.

Further aspects of embodiments are now described in more detail.

## 1. Conversion to point cloud

The 3D scenes and the 3D query objects may be 3D models or physical objects. The 3D scenes and/or query objects may be provided as CAD models. Typical file formats for the 3D scenes and/or query objects include STEP (STandard for the Exchange of Product model data), IGES (Initial Graphics Exchange Specification), etc. for CAD, a mesh-based form (e.g. MSH, PLY (polygon file format), STL (Standard Triangle Language or Standard Tessellation Language), etc.) or a point cloud form (e.g. LAS (LASer format), CSV (Comma Separated Value), etc.). If the 3D scene or the 3D query object is not in a point-cloud format, the method comprises converting the 3D scene or query object into a 3D point-cloud representation. The conversion from the file formats into a point-cloud data structure (representation) may be performed using existing tools and technologies.

For example, for the case where a 3D (e.g. CAD) model is provided, a 3D point-cloud representation may be obtained by sampling the surfaces (boundaries) of the model. Such functions are readily available in off-the-shelf software such as CloudCompare (available at www.cloudcompare.org), etc. Such functions may also be used to convert a triangulated model (e.g. in MSH format) into a 3D point-cloud representation with a specified level of detail (resolution).

For the case where a 3D query object (or a 3D scene) is a physical object, the 3D point cloud may be obtained using 3D scanning hardware. Example of such hardware are:

• Structured light sensors, such as Microsoft Kinect, Intel RealSense (D4xx series) or Occipital Structure Sensor.

- Time-of-flight sensors such as those based on the DepthSense 325.
- LiDAR cameras such as Intel RealSense L515.
- Two or more normal cameras in combination with Photogrammetry.

Optionally, in order to increase the resolution of the 3D scan or to generate a more complete scan (with fewer missing regions), multiple 3D scans may be merged into one larger scan using Point Cloud registration techniques.

**2. Generating the scene-shape dataset**

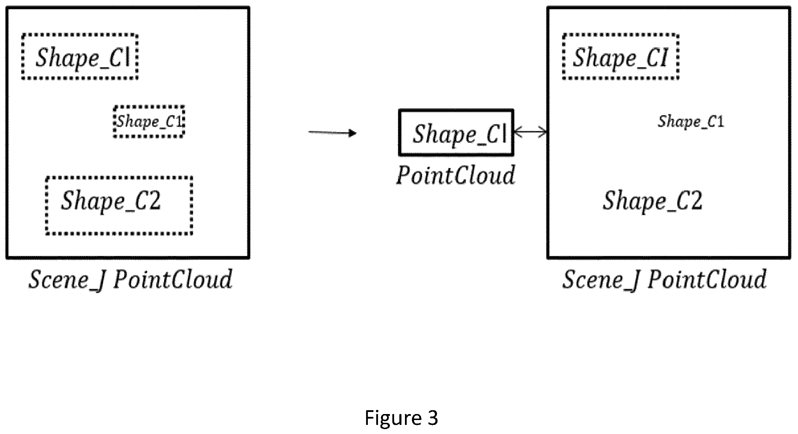

Figure 3 is a schematic illustration of a 3D training scene for use in training the object detection model according to an example arrangement (right) compared to a 3D scene used for training in previous methods (left). Annotations are shown as bounding boxes in dashed lines.

Typically, 3D object detection datasets consist of a collection of $K$ 3D point clouds (3D scenes) with annotations. Each 3D scene contains, as annotations, labels and 3D bounding boxes around 3D objects that belong to the set of $N$ classes $C = \{C1, C2,...,CN\}$. Figure 3 shows a 3D scene (scene_J PointCloud) on the left, which may be used for training in previous methods.

A 3D training scene for use in training the object detection model according to the example arrangement may be constructed using a 3D scene used for training in previous methods (e.g. Scene_J PointCloud shown on the left in Figure 3), as follows. For each class in $C$, lists of shapes $Shape\_Cl$ $(l = 1, ..., N)$ that belong to this class are generated. The shapes of the class $Cl$ may be generated by cropping the 3D scene point-clouds with the $Cl$-labelled bounding boxes. Alternatively, the class shapes may be sourced from corresponding object classification or CAD parts datasets. For the object detection model training, the scene-shape annotated dataset is constructed and tailored for the one-shot setting, as follows. For each 3D scene, one of the appearing classes $Cl$ is selected/chosen as a training class. A dataset item of the scene-shape annotated dataset is composed using a 3D scene point-cloud $Scene\_J$ $(J = 1,...,K)$ and an item (which may be chosen randomly) from the list of shapes belonging to the training class $Shape\_Cl$. The annotations in the 3D scene for 3D objects belonging to classes other than the training class are removed from the 3D scene. For example, Figure 3 shows on the right the scene-shape pair comprising the 3D training scene Scene_J PointCloud with the annotations for 3D objects belonging to classes other than the training class $Cl$ having been removed, and the 3D training object $Shape\_Cl$. The remaining annotations (for 3D objects belonging to the training class) are needed to supervise the detection of 3D objects in the 3D training scenes similar to the 3D training object. In other words, the remaining annotations are used in the training of the object detection model to supervise the detection of 3D objects in the 3D training scenes that "look similar" to the given shape. The training of the object detection model is described in more detail later.

The process described above of constructing a 3D training scene from an annotated 3D scene is repeated for other 3D scenes, e.g. from a 3D object detection dataset, with a range of classes being selected as the training class, to construct the scene-shape annotated dataset. After sampling through the 3D scenes several times (i.e. the process above is repeated for the same 3D scene with a different class being selected as the training class), a substantial variability of scene-shape pairs can be generated in the scene-shape annotated dataset. Alternatively, a fixed amount of 3D scene occurrences and corresponding shape classes (as training classes) may be considered to ensure a desired variability in the scene-shape annotated dataset.

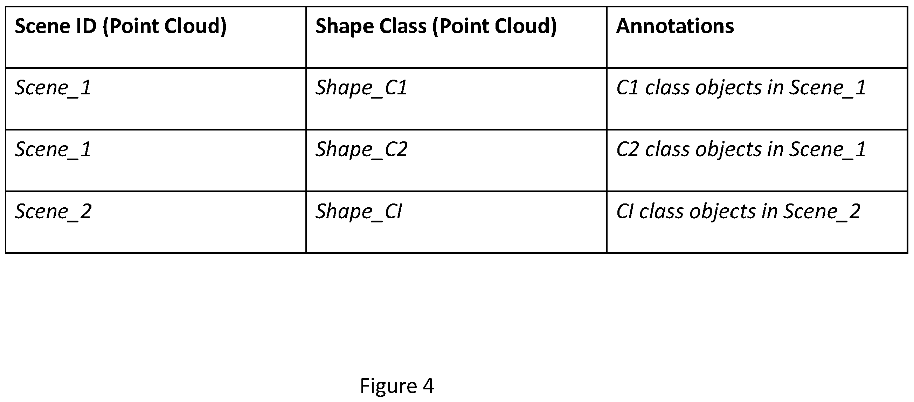

Figure 4 illustrates an example of the scene-shape annotated dataset according to an example arrangement, in which three entries are stored. Each item of the left column contains a 3D point-cloud representation of a 3D training scene, each item of the middle column contains a 3D point-cloud representation of a 3D training object, and each item of the right column lists the annotations present in the corresponding 3D training scene for that entry. The first two 3D training scenes are the same (Scene_1), but the training class and therefore the 3D training object and the annotations in the 3D training scene in each entry differ. The 3D training scene and 3D training object point clouds may have a different amount of points, due to differences in their sizes, conversion methods, etc. During model training (training of the object detection model), a fixed amount of points may be sampled for each dataset entry.

The scene-shape annotated dataset is not essential. The object detection model may be trained without the 3D training scenes and 3D training objects being stored in such a dataset. The object detection model may be trained using a single scene-shape pair or a plurality of scene-shape pairs.

**3. Training the object detection model**

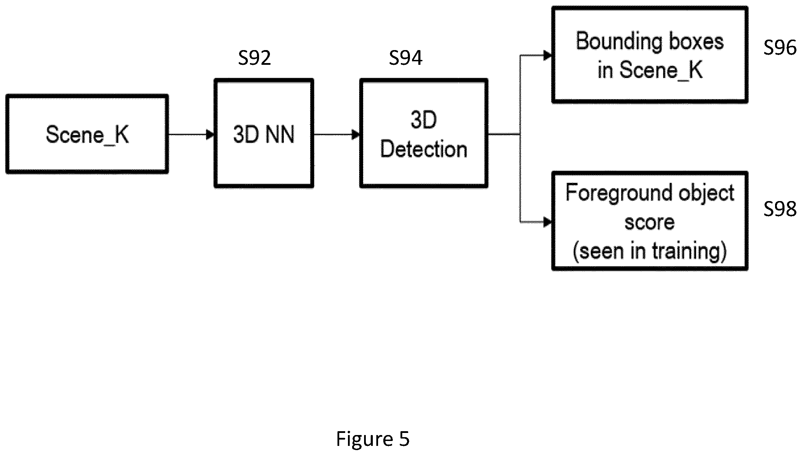

Figure 5 is a schematic diagram illustrating the training of a standard 3D object detection process useful for understanding embodiments. Standard 3D object detection models (e.g. as shown in Figure 5) typically take as input scene point clouds with annotated objects. A 3D Neural Network (NN) may be used to generate feature descriptors. PointNet++ (described in "PointNet++: Deep Hierarchical Feature Learning on Point Sets in a Metric Space", by Qi et al, available at https://arxiv.org/abs/1706.02413) is a suitable NN backbone for such a task, however other networks may be considered. Subsequently, a 3D detection module (e.g. VoteNet (described in "Deep Hough Voting for 3D Object Detection in Point Clouds", by Qi et al, available at https://arxiv.org/abs/1904.09664)) uses the scene features to propose bounding boxes for the annotated objects. Usually, the models can reliably detect only the object classes seen during the training. A scene point cloud used for training such a standard 3D object detection process (e.g. "Scene_K") includes annotations for all 3D objects present therein.

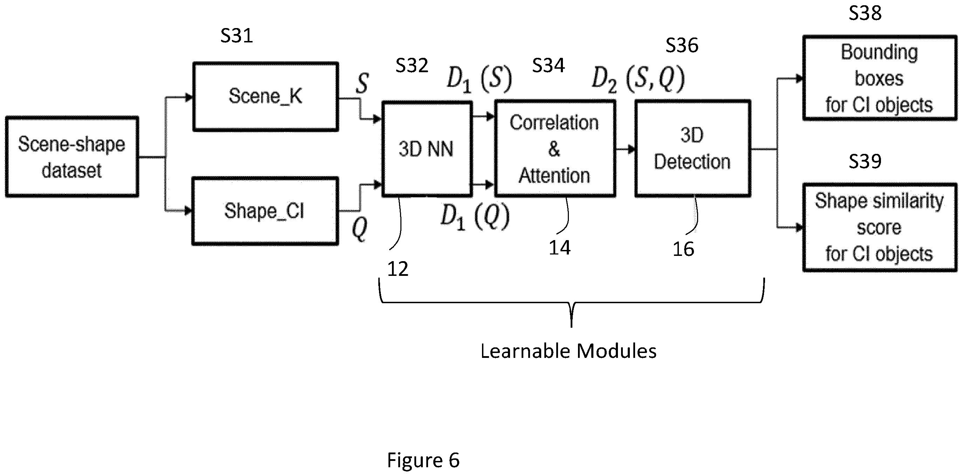

Figure 6 is a schematic diagram illustrating a one-shot object detection architecture and the training of the object detection model according to an example embodiment. The one-shot object detection architecture of the example embodiment, in combination with the scene-shape pairs (i.e. the scene-shape annotated dataset) is designed to learn similarities between a 3D training object and 3D objects in a 3D training scene, rather than memorising object classes in the training data. Therefore the method of the embodiment searches for and detects 3D objects that are the same as or similar to a 3D query object by assessing similarities between the shape of the 3D objects in the 3D scene and the 3D query object. The object detection model is implemented using the architecture illustrated in Figure 6 and may considered to comprise a feature descriptor generation module 12, a correlation module 14, and a detection module 16. The modules 12, 14, 16 of the object detection model are learnable and are trained using the annotations in the scene-shape dataset. That is, training the object detection model may be considered equivalent to training the modules 12, 14, 16. However the architecture does not need to be considered in terms of "modules". For example, the modules 12, 14, 16 may be treated as one object detection model and trained end-to-end, and no distinction may be made between the modules 12, 14, 16.

As shown in Figure 6, at step S31, both the scene and shape point clouds S and Q (i.e. a 3D point-cloud representation of a 3D scene and a 3D point-cloud representation of a corresponding 3D training object of a scene-shape pair) are input individually into the feature descriptor generation module 12 which in this example implementation is implemented by a 3D NN (e.g. PointNet++). In step S32, the 3D NN, e.g. PointNet++, generates feature descriptors of the 3D training scene and the 3D training object. In detail, in step S32 PointNet++ learns both local and global features of each point cloud (the 3D training scene and the 3D training object) by using a hierarchy of neural networks applied to the point cloud partitions. For each point cloud, PointNet++ extracts local features from small neighbourhoods of the point cloud and combines them into larger units to produce higher-level features. In the case of this example arrangement, at step S32 the raw 3D point clouds for scene and shape, that is, the 3D point-cloud representation of the 3D training scene and the 3D point-cloud representation of the 3D training object, (of size *50,000 x 3* and *2048 x 3,* respectively) are compressed into two high-dimensional feature descriptors $D_1(S)$ and $D_1(Q)$, each of size *1024 x 256.* This can be considered, for each of the 3D training scene and the 3D training object, as selecting *1024* points in the original point clouds that each captures the local and global context in a 256-dimensional per-point feature vector. That is, considering the 3D training scene, from 50,000 original points, after processing by the 3D NN in step S32, the output is 1024 original points. Each of these 1024 points now encodes information of the point's local and global context in its 256-dimensional feature vector. Since there are 1024 points each with a 256-dimensional feature vector, this gives the feature descriptor $D_1(S)$ of size 1024 x 256. Corresponding explanations apply for the 3D training object.

That is, according to the example arrangement, in step S32 a single feature descriptor (a scene feature descriptor, or a training scene feature descriptor) is generated for the 3D training scene and another single feature descriptor (an object feature descriptor, or a training object feature descriptor) is generated for the 3D training object. In other words, generating the feature descriptors in step S32 comprises extracting local features from small neighbourhoods/regions of the 3D point-cloud representation of the 3D training scene and combining them to produce higher-level feature descriptors to produce a training scene feature descriptor, and extracting local features from small neighbourhoods/regions of the 3D point-cloud representation of the 3D training object and combining them to produce higher-level feature descriptors to produce a training object feature descriptor. In other words, generating the feature descriptors in step S32 comprises compressing the 3D point-cloud representation of the 3D training scene into a training scene feature descriptor; and compressing the 3D point-cloud representation of the 3D training object into a training object feature descriptor.

Each feature descriptor is a matrix, which in the example arrangement has a size of 1024x256. The feature descriptors may of course have sizes different to those described above. The feature descriptors may have different sizes to each other. A plurality of feature descriptors may be generated for the 3D training scene and/or the 3D training object rather than a single feature descriptor for each.

The output of step S32 in the example arrangement is the two feature descriptors $D_1(S)$ and $D_1(Q)$. These are input to the correlation module 14. In step S34, these scene and shape feature descriptors are combined via the learnable correlation module 14. The correlation module 14 may be implemented using a non-local network (e.g. as described in "Non-local neural networks", by Xiaolong Wang et al, available at https://arxiv.org/abs/1711.07971), which constructs an "attention" mechanism between the scene and the shape features. In detail, the correlation module 14 yields a single feature descriptor (a combined feature descriptor, or a combined training feature descriptor) $D_2(D_1(S),D_1(Q))$, maintaining input size (i.e. the size of the combined feature descriptor is that same as the size of the training scene feature descriptor and the training object feature descriptor. In the example arrangement the size of the combined feature descriptor

$D_2(D_1(S),D_1(Q))$ is 1024 x 256).

To generate the combined feature descriptor in step S34, the correlation module 14 computes relationships between each feature of the scene and all features in the shape (which features are contained in the training scene feature descriptor and the training object feature descriptor, respectively). Each entry of the combined feature descriptor $D_2$ is computed as a weighted sum of the scene and shape features at all positions *(F=1024)*

$$D_{2_i} = \frac{1}{F}\sum_{j=1}^{F} f(D_1(S)_i, D_1(Q)_j)g(D_1(Q)_j), \quad i = 1,\ldots,F.$$

Here, $g(x) = W_g x$ is a linear embedding with weight matrix $W_g$. The relationship between the feature vector pairs is computed through a scalar function *f*, which measures affinity between them. In the example arrangement, the function is implemented as a dot product of the feature embeddings $f(x,y) = (W_x x)^T * W_y y$. The weights *W* above are learnable, which allows the correlation module 14 (the model) to find feature correlations based on training data. Alternatively, the correlation module 14 may be implemented via a fully connected neural network. Training object and training scene feature descriptors may be concatenated into a single descriptor (of size 2 x 1024 x 256) and processed by fully connected layers to learn correlations. Since the combined feature descriptor $D_2$ contains mutual information of the scene-shape pair, it allows the detection module 16 to yield relevant object proposals, i.e., predict bounding boxes in the 3D training scene that match the annotations in the 3D training scene for the training class, described below.

The combined feature descriptor is input to the next stage for processing in step S36 (i.e. is input to the detection module 16). In step S36, the detection module (which may be implemented by another 3D neural network (e.g. PointNet++ network) is used to process the combined training feature descriptor $D_2$ and yield B 3D bounding box proposals. In an example implementation, from the descriptor $D_2$, the module selects B points and applies to its neighbourhoods a multi-layer perceptron network with fully connected layers of decreasing dimensions, where the last layer outputs 7 features. In this example arrangement *B = 256,* which has been proven to yield high accuracy for traditional object detection (e.g. as described in "Deep Hough Voting for 3D Object Detection in Point Clouds", by Qi et al, available at https://arxiv.org/abs/1904.09664). Other numbers may be chosen for B, e.g. 128.

That is, in step S36, the feature descriptor of size 1024 (points) x 256 (features) is reduced to 256 (points) x 7. These 7 features are used as parameters of the bounding boxes, which is explained in more detail below.

The output of step S36, shown as steps S38 and S39, in the example arrangement is therefore of size B x 7 (7 features for each box) and contains for each bounding box coordinates of its centre (3 features specifying coordinates e.g. x, y, z), dimensions (3 features specifying the dimensions length, width, and height) and shape similarity score SS $\in [0,1]$ (1 feature) which indicates a similarity between the 3D object identified by the bounding box and the 3D training object. A loss function consisting of binary classification and regression parts is minimised to fit the model to the scene-shape data (i.e. to the scene-shape pair). For *Scene_J,* training class *Cl* and the corresponding shape (3D training object) from *Shape_Cl,* the object detection model (i.e. the modules 12, 14, 16) is trained to maximise the shape similarity scores for the bounding boxes around the annotated *Cl* class objects in the 3D training scene (Scene_J) and minimize it for the other bounding boxes, or proposals (i.e. to minimise the shape similarity scores for bounding boxes around other detected 3D objects). The predicted positions and sizes of the boxes are regressed against the ground truth annotations in the 3D training scene. The processing illustrated in Figure 6 is repeated for a plurality of scene-shape pairs (e.g. of the scene-shape annotated dataset). The same 3D training scene may appear more than once with different class annotations (depending on the shape pair, i.e. the training class). This forces the object detection model to output different predictions for the same 3D training scene. This may be achieved because the predictions of the object detection model are based on shape similarity rather than previously seen classes. Provided during the training with different classes and variable shapes, the object detection model may thus generalise the detection to unseen classes based on the shape similarity.

In summary, the following characteristics of the one-shot architecture illustrated in Figure 6 may aid in the detection of previously unseen objects (3D objects from unseen classes). The learning is based on the scene-shape pairs (e.g. in the scene-shape annotated dataset), in which scene-shape similarity is learned, i.e. in which the object detection model is trained to analyze similarity between a 3D (training) object and a 3D (training) scene and compute shape similarity scores). During detection of a 3D query object belonging to an unseen object class (i.e. a class not used as a training class), the object detection model compares feature of the 3D query object to the features produced by the 3D scene. If the object detection model finds a relevant correlation between the two, high shape similarity scores are computed.

## 4. Querying objects in the scene DB

In use of the object detection model, 3D query objects may be searched for in the scene DB (i.e. in the 3D scenes of the scene DB). For each entry, the pre-trained object detector (object detection model) processes the scene and the query point clouds and outputs the corresponding bounding box predictions as described in the previous subsection. That is the object detection model is used to search for a 3D query object in a 3D scene using processing that corresponds to the training described in the previous subsection, except that the 3D training scene is replaced by a 3D scene and the 3D training object is replaced with a 3D query object, and that the object detection model is already trained. That is, to search for a 3D query object in a 3D scene, the trained object detection model is provided with a 3D point-cloud representation of the 3D scene and a 3D point-cloud representation of the 3D query object. The method of searching for a 3D query object in a 3D scene comprises, using the trained object detection model, generating feature descriptors of the 3D point-cloud representation of the 3D scene (which comprises a plurality of 3D objects) and of the 3D point-cloud representation of the 3D query object, combining the feature descriptors of the 3D scene and of the 3D query object to detect at least one 3D object in the 3D scene, and computing at least one shape similarity score for the at least one 3D object detected in the 3D scene, respectively, each similarity score indicating a similarity between a detected 3D object and the 3D query object.

In an example arrangement, the generation of the feature descriptors is performed by/using the feature descriptor generation module 12 as described in the previous subsection, the combining of the feature descriptors is performed by/using the correlation module 14 as described in the previous subsection, and the detection of the at least one 3D object in the 3D scene is performed by/using the object detection module 16 as described in the previous subsection. As mentioned in the previous subsection, the object detection model does not need to be considered in terms of the modules 12, 14, 16. For example, the object detection model may be considered as a method.

The processing of searching for a 3D query object in a 3D scene may be repeated for a plurality of 3D scenes (i.e. those stored in the scene DB) and/or for a plurality of different 3D query objects. Since the search may be conducted for different queries (different 3D query objects) but for the same 3D scene, feature descriptors of the 3D scenes may be computed once (e.g. using the 3D NN) and then re-used for computational efficiency.

In an example arrangement, the searching for a 3D query object is performed for a plurality of 3D scenes. The scene IDs with query shape similarity scores above a (possibly user-defined) threshold are included in an inspection report which is output. That is, the scene IDs relating to 3D scenes in which a 3D object was detected with a similarity score above the threshold are included in the inspection report. The inspection report may list any of the query ID/name/category (automatically generated or assigned by the user), the scene ID from the scene DB, coordinates of the centres of the bounding boxes of any detected 3D object with a similarity score above the threshold, the dimensions of any such bounding boxes, and the shape similarity scores of any such detected 3D objects. The output may include (as part of or as well as or instead of the inspection report) a visual representation of each 3D scene with a bounding box around each 3D object detected in the scene (or bounding boxes only for the detected 3D objects with shape similarity scores above the threshold), and optionally the shape similarity score for each displayed detected 3D object.

The object detection method may comprise searching for a 3D query object in a single 3D scene. If the shape similarity score for the at least one detected 3D object is above a threshold value, the output may comprise a determination that the 3D query object (or a 3D query-like object) is present in the scene. The output may comprise the location (coordinates) of the at least one 3D object detected in the scene (or only those with a shape similarity score above a threshold value) and the shape similarity score for the at least one 3D object detected in the scene. The output may comprise a visual representation of the 3D scene with a bounding box around the at least one (or each) 3D object detected in the 3D scene (with a shape similarity score above a threshold value), and optionally the shape similarity scores for the at least one (or each) 3D object detected in the scene. In any case, the output may be displayed on a display which may be a part of the apparatus 10 or may be provided separately. Any output may be considered an inspection report.

3D objects of the same class may have significant shape variability. The threshold value may be adjusted (e.g. by the user) to find more dissimilar 3D objects. Multiple query results may be assembled into a single inspection report or stored separately. The 3D scenes with their bounding boxes information may be visualized in off-the-shelf 3D software. The inspection report or the output may be used for further analysis and applications, for example:

- Detection of the query and query-like objects (based on the shape similarity threshold) in the Scene DB.
- Inspection of existence of multiple query objects in the scenes, their relative positions, proximity, possible obstructions, etc.

An example implementation is now described to demonstrate how an embodiment may be applied to detect a query object in a collection of CAD models. The object detection model (or the apparatus 10) is provided with two inputs:

- Scene DB containing 3D CAD models of laptop parts (Laptop DB) provided also in the mesh-based MSH format.

- A 3D query object (CAD part) present in the laptop model.

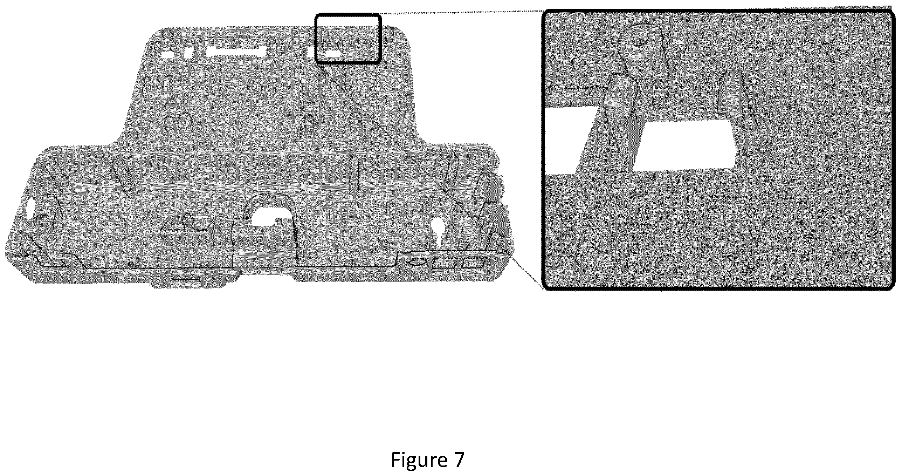

Laptop DB is a collection of annotated 3D CAD models. It contains several hundreds of laptop components which are labelled with 10 object classes (clip, cylindrical pin, chip socket, hole, etc.) suitable for the object detection task. Figure 7 illustrates a 3D point-cloud representation of a 3D CAD model of a component from Laptop DB on the left, and an enlarged view of CAD parts/objects on the right (2 clips, 2 holes and a cylindrical pin) in the 3D point-cloud representation. Figure 7 illustrates a typical scene from Laptop DB, that includes objects from several classes (e.g. the pair of clips in the middle). To showcase the object detection functionality in the one-shot setting, all annotations for clips (as the "one-shot class") are removed from the 3D scenes (3D CAD models) of Laptop DB, and the scene-shape annotated dataset used for training the object detection model is constructed with the remaining nine classes included as annotations. As previously described, a dataset entry (a scene-shape pair) is constructed by randomly choosing one of the nine classes as the training class, removing from a given 3D scene (3D CAD model) annotations of objects belonging to the other eight classes, and associating the resulting 3D scene with an object of the training class appearing in the 3D scene (3D training object) to construct a scene-shape pair. This is repeated as previously described. The mesh-based files (MSH) are converted into point clouds of sizes 50,000 and 2048 for scenes and shapes (3D training objects), respectively. The scene-shape annotated dataset is used to train the object detection model as previously described. With this approach, the model is not supervised explicitly by the clip (one-shot class) labels. That is, after the training, the trained object detection model has not been trained on the "clip" class.

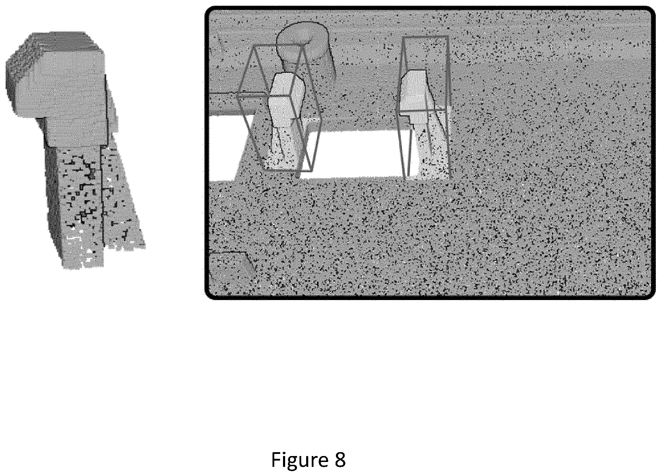

After training, the trained object detection model was used to search for 3D query objects in the 3D scenes of Laptop DB. All of the annotations in the 3D scene were removed for the testing of the model (but were used to measure the accuracy of the model - i.e. the predictions were compared with the annotations). For the nine classes used in training (i.e. used as "training classes"), the trained object detection model achieved an accuracy comparable to the traditional 3D object detectors. For the clip ("one-shot") class, the results are as follows. A 3D query object (i.e. a clip) and the 3D scene point clouds were provided to the trained object detection model and the 3D query object was searched for in the 3D scene according to the methods previously described. Figure 8 illustrates the 3D query object on the left and the detection of the 3D query object in the Laptop DB 3D scene on the right, in which the predicted bounding boxes are shown. The shape similarity scores for the predicted bounding boxes are SS=0.69. In this example, the ground truth bounding boxes for the two clips were available in the original Laptop DB and thus are compared with the results of the trained object detection model. Based on this comparison, the intersection over union metric IoU=0.58. The intersection over union metric is a standard object detection metric which measures the difference between the predicted and ground truth bounding boxes (IoU is described at https://giou.stanford.edu/). An intersection over union metric of IoII > 0.5 is typically considered as a good result for 3D object detection). Lowering the shape similarity threshold results in the appearance of several other bounding boxes on the laptop model. It will be appreciated that the same procedure may be repeated for all scenes in Laptop DB and other queries.

Embodiments may be utilized in annotation (labelling) tasks of 3D datasets, as described below. Active learning is a machine learning concept, in which an algorithm is used to query objects from a dataset and assign them specific labels. The updated dataset is then used to re-train and continuously update the model. In the context of an embodiment, the "one-shot" detector (i.e. the object detection model described above) may be used to quickly propose (detect) query-like objects in the existing dataset. Since the query may belong to a previously unseen class when using the object detection model of the embodiment, the proposals may be used to update the dataset with the new class annotations. Since the performance of the one-shot detector of an embodiment may vary (e.g. depending on shape variability within a class), human annotators may additionally inspect and edit the proposals. A traditional object detection method (i.e. a DL model) may then be trained on the updated dataset to explicitly detect objects of the query class, which may yield more accurate detection.

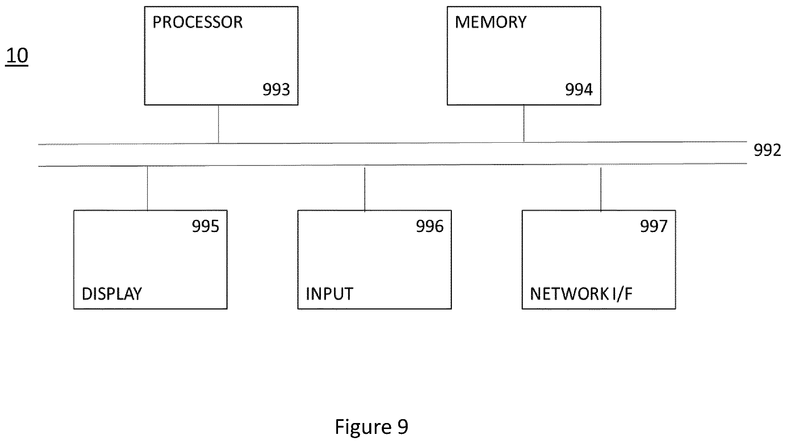

Figure 9 is a block diagram of a computing device 10, such as a data storage server, which embodies the present invention, and which may be used to implement some or all of the operations of a method embodying the present invention, and perform some or all of the tasks of apparatus of an embodiment. The computing device is an example of the apparatus 10 and may be used to implement any of the method steps described above.

The computing device 10 comprises a processor 993 and memory 994. Optionally, the computing device also includes a network interface 997 for communication with other such computing devices, for example with other computing devices of invention embodiments. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a general purpose computer, special purpose computer, or special purpose processing device (e.g., one or more processors) to perform one or more functions or operations. For example, the computer-executable instructions may include those instructions for implementing an object detection method disclosed herein, or any other method steps disclosed herein. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described herein. The memory 994 stores data being read and written by the processor 993 and may store a scene DB and/or a scene-shape annotated dataset and/or at least one 3D scene and/or at least one scene-shape pair and/or at least one 3D query object. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein.

The display unit 995 may display a representation of data stored by the computing device, such as a scene DB and/or scene-shape annotated dataset and/or at least one 3D scene and/or at least one scene-shape pair and/or at least one 3D query object and/or an inspection report as described above or any other output described above, and may also display a cursor and dialog boxes and screens enabling interaction between a user and the programs and data stored on the computing device. The input mechanisms 996 may enable a user to input data and instructions to the computing device, such as selecting scenes (e.g. from a scene DB) and/or at least one 3D query object to be used in a search, and/or selecting a scene-shape pair (e.g. from a scene-shape annotated dataset) to be used for training.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 10 such as that illustrated in Figure 9. Such a computing device need not have every component illustrated in Figure 9, and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention can be implemented in digital electronic circuitry, or in computer hardware, firmware, software, or in combinations of them. The invention can be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program can be in the form of a stand-alone program, a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites and interconnected by a communication network.

Method steps of the invention can be performed by one or more programmable processors executing a computer program to perform functions of the invention by operating on input data and generating output. Apparatus of the invention can be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

## Claims

1. A computer-implemented method of training an object detection model to search for a 3D query object, the method comprising:

   providing a 3D representation of a 3D training scene comprising annotated 3D objects of a training class;
   providing a 3D representation of a 3D training object belonging to the training class, wherein the 3D training scene and the 3D training object belong to a scene-shape pair corresponding to the training class;
   using the object detection model,

   generating feature descriptors of the 3D representation of the 3D training scene and of the 3D representation of the 3D training object, and
   combining the feature descriptors of the 3D training scene and of the 3D training object to detect at least one 3D object in the 3D training scene, outputting at least one bounding volume around the at least one detected 3D object, and computing at least one shape similarity score for the at least one detected 3D object, each shape similarity score indicating a similarity between a detected 3D object and the 3D training object; and

   training the object detection model to output the at least one bounding volume to maximize a shape similarity score for a bounding volume around a said annotated 3D object of the training class and to minimize a shape similarity score for a bounding volume around any other detected 3D object.

2. The method as claimed in claim 1, wherein the generation of the feature descriptors is performed using a 3D neural network.

3. The method as claimed in claim 1 or 2, wherein the feature descriptors are combined to generate at least one combined feature descriptor, and wherein the method comprises using the object detection model to process the combined feature descriptor to detect the at least one 3D object in the 3D scene and calculate the at least one shape similarity score.

4. The method as claimed in claim 3, wherein the processing of the combined feature descriptor is performed using another 3D neural network.

5. The method as claimed in claim 3 or 4, wherein the feature descriptors comprise a scene feature descriptor corresponding to the 3D training scene and comprising scene features of the 3D training scene, and an object feature descriptor corresponding to the 3D training object and comprising object features of the 3D training object, and wherein combining the feature descriptors comprises computing relationships between each feature of the scene feature descriptor with the features of the object feature descriptor to produce the combined feature descriptor, each entry of which is computed as a weighted sum of the scene and object features at all positions.

6. A computer-implemented method of training an object detection model to search for a 3D query object in a 3D query scene, the method comprising iterating the method according to any of the preceding claims for a plurality of scene-shape pairs, the plurality of scene-shape pairs comprising at least a first scene-shape pair corresponding to a first training class and a second scene-shape pair corresponding to a second training class.

7. A computer program which, when run on a computer, causes the computer to train an object detection model to search for a 3D query object by:

   providing a 3D representation of a 3D training scene comprising annotated 3D objects of a training class;

providing a 3D representation of a 3D training object belonging to the training class, wherein the 3D training scene and the 3D training object belong to a scene-shape pair corresponding to the training class;
using the object detection model,

generating feature descriptors of the 3D representation of the 3D training scene and of the 3D representation of the 3D training object, and
combining the feature descriptors of the 3D training scene and of the 3D training object to detect at least one 3D object in the 3D training scene, outputting at least one bounding volume around the at least one detected 3D object, and computing at least one shape similarity score for the at least one detected 3D object, each shape similarity score indicating a similarity between a detected 3D object and the 3D training object; and

training the object detection model to output the at least one bounding volume to maximize a shape similarity score for a bounding volume around a said annotated 3D object of the training class and to minimize a shape similarity score for a bounding volume around any other detected 3D object.

8. An information processing apparatus comprising a memory and a processor connected to the memory, wherein the processor is configured to train an object detection model to search for a 3D query object by:

providing a 3D representation of a 3D training scene comprising annotated 3D objects of a training class;
providing a 3D representation of a 3D training object belonging to the training class, wherein the 3D training scene and the 3D training object belong to a scene-shape pair corresponding to the training class;
using the object detection model,

generating feature descriptors of the 3D representation of the 3D training scene and of the 3D representation of the 3D training object, and
combining the feature descriptors of the 3D training scene and of the 3D training object to detect at least one 3D object in the 3D training scene, outputting at least one bounding volume around the at least one detected 3D object, and computing at least one shape similarity score for the at least one detected 3D object, each shape similarity score indicating a similarity between a detected 3D object and the 3D training object; and

training the object detection model to output the at least one bounding volume to maximize a shape similarity score for a bounding volume around a said annotated 3D object of the training class and to minimize a shape similarity score for a bounding volume around any other detected 3D object.

9. A computer-implemented method of searching for a 3D query object in a 3D scene, the method comprising, using a trained object detection model:

generating feature descriptors of a 3D representation of the 3D scene and of a 3D representation of the 3D query object; and
combining the feature descriptors of the 3D scene and of the 3D query object to detect at least one 3D object in the 3D scene and computing at least one shape similarity score for the at least one 3D object detected in the 3D scene, each similarity score indicating a similarity between a detected 3D object and the 3D query object.

10. The method as claimed in claim 9, wherein the object detection model has been trained according to the method as claimed in any of claims 1 to 6.

11. The method as claimed in claim 9 or 10, wherein the 3D query object is a manufactured product.

12. The method as claimed in any of claims 9 to 11, comprising, when a shape similarity score for a said detected 3D object is above a threshold value, outputting a determination that the 3D query object is present in the scene.

13. The method as claimed in any of claims 9 to 11, comprising outputting a visual representation of the 3D scene with at least one bounding volume around the at least one 3D object detected in the 3D scene, and outputting the shape similarity score for the at least one 3D object detected in the scene.

14. A computer-implemented method of searching for a 3D query object in a plurality of 3D scenes, the method comprising iterating the method according to any of claims 9 to 11 for each of the plurality of 3D scenes.

**15.** The method as claimed in claim 14, comprising, for a detected 3D object with a shape similarity score equal to or above a threshold value, outputting a determination that the 3D query object is present in the 3D scene in which the said 3D object was detected.

**Amended claims in accordance with Rule 137(2) EPC.**

**1.** A computer-implemented method of training an object detection model to search for a 3D query object, the method comprising:

providing (S31) a 3D representation of a 3D training scene comprising annotated 3D objects of a training class; providing (S31) a 3D representation of a 3D training object belonging to the training class, wherein the 3D training scene and the 3D training object belong to a scene-shape pair corresponding to the training class; using the object detection model,

generating (S32) feature descriptors of the 3D representation of the 3D training scene and of the 3D representation of the 3D training object, and combining (S34) the feature descriptors of the 3D training scene and of the 3D training object to detect at least one 3D object in the 3D training scene, outputting (S38) at least one bounding volume around the at least one detected 3D object, and computing (S39) at least one shape similarity score for the at least one detected 3D object, each shape similarity score indicating a similarity between a detected 3D object and the 3D training object; and

training the object detection model to output the at least one bounding volume to maximize a shape similarity score for a bounding volume around a said annotated 3D object of the training class and to minimize a shape similarity score for a bounding volume around any other detected 3D object.

**2.** The method as claimed in claim 1, wherein the generation of the feature descriptors is performed using a 3D neural network.

**3.** The method as claimed in claim 1 or 2, wherein the feature descriptors are combined to generate at least one combined feature descriptor, and wherein the method comprises using the object detection model to process the combined feature descriptor to detect the at least one 3D object in the 3D scene and calculate the at least one shape similarity score.

**4.** The method as claimed in claim 3, wherein the processing of the combined feature descriptor is performed using another 3D neural network.

**5.** The method as claimed in claim 3 or 4, wherein the feature descriptors comprise a scene feature descriptor corresponding to the 3D training scene and comprising scene features of the 3D training scene, and an object feature descriptor corresponding to the 3D training object and comprising object features of the 3D training object, and wherein combining the feature descriptors comprises computing relationships between each feature of the scene feature descriptor with the features of the object feature descriptor to produce the combined feature descriptor, each entry of which is computed as a weighted sum of the scene and object features at all positions.

**6.** A computer-implemented method of training an object detection model to search for a 3D query object in a 3D query scene, the method comprising iterating the method according to any of the preceding claims for a plurality of scene-shape pairs, the plurality of scene-shape pairs comprising at least a first scene-shape pair corresponding to a first training class and a second scene-shape pair corresponding to a second training class.

**7.** A computer program which, when run on a computer, causes the computer to train an object detection model to search for a 3D query object by:

providing (S31) a 3D representation of a 3D training scene comprising annotated 3D objects of a training class; providing (S31) a 3D representation of a 3D training object belonging to the training class, wherein the 3D training scene and the 3D training object belong to a scene-shape pair corresponding to the training class;

using the object detection model,

generating (S32) feature descriptors of the 3D representation of the 3D training scene and of the 3D representation of the 3D training object, and

combining (S34) the feature descriptors of the 3D training scene and of the 3D training object to detect at least one 3D object in the 3D training scene, outputting (S38) at least one bounding volume around the at least one detected 3D object, and computing (S39) at least one shape similarity score for the at least one detected 3D object, each shape similarity score indicating a similarity between a detected 3D object and the 3D training object; and

training the object detection model to output the at least one bounding volume to maximize a shape similarity score for a bounding volume around a said annotated 3D object of the training class and to minimize a shape similarity score for a bounding volume around any other detected 3D object.

8. An information processing apparatus (10) comprising a memory (994) and a processor (993) connected to the memory (994), wherein the processor (993) is configured to train an object detection model to search for a 3D query object by:

providing a 3D representation of a 3D training scene comprising annotated 3D objects of a training class;

providing a 3D representation of a 3D training object belonging to the training class, wherein the 3D training scene and the 3D training object belong to a scene-shape pair corresponding to the training class;

using the object detection model,

generating feature descriptors of the 3D representation of the 3D training scene and of the 3D representation of the 3D training object, and

combining the feature descriptors of the 3D training scene and of the 3D training object to detect at least one 3D object in the 3D training scene, outputting at least one bounding volume around the at least one detected 3D object, and computing at least one shape similarity score for the at least one detected 3D object, each shape similarity score indicating a similarity between a detected 3D object and the 3D training object; and

training the object detection model to output the at least one bounding volume to maximize a shape similarity score for a bounding volume around a said annotated 3D object of the training class and to minimize a shape similarity score for a bounding volume around any other detected 3D object.

9. A computer-implemented method of searching for a 3D query object in a 3D scene, the method comprising, using a trained object detection model:

generating feature descriptors of a 3D representation of the 3D scene and of a 3D representation of the 3D query object; and

combining the feature descriptors of the 3D scene and of the 3D query object to detect at least one 3D object in the 3D scene and computing at least one shape similarity score for the at least one 3D object detected in the 3D scene, each similarity score indicating a similarity between a detected 3D object and the 3D query object.

10. The method as claimed in claim 9, wherein the object detection model has been trained according to the method as claimed in any of claims 1 to 6.

11. The method as claimed in claim 9 or 10, wherein the 3D query object is a manufactured product.

12. The method as claimed in any of claims 9 to 11, comprising, when a shape similarity score for a said detected 3D object is above a threshold value, outputting a determination that the 3D query object is present in the scene.

13. The method as claimed in any of claims 9 to 11, comprising outputting a visual representation of the 3D scene with at least one bounding volume around the at least one 3D object detected in the 3D scene, and outputting the shape similarity score for the at least one 3D object detected in the scene.

14. A computer-implemented method of searching for a 3D query object in a plurality of 3D scenes, the method comprising iterating the method according to any of claims 9 to 11 for each of the plurality of 3D scenes.

15. The method as claimed in claim 14, comprising, for a detected 3D object with a shape similarity score equal to or above a threshold value, outputting a determination that the 3D query object is present in the 3D scene in which the said 3D object was detected.

Figure 1

Figure 2

Figure 3

| Scene ID (Point Cloud) | Shape Class (Point Cloud) | Annotations |
|---|---|---|
| Scene_1 | Shape_C1 | C1 class objects in Scene_1 |
| Scene_1 | Shape_C2 | C2 class objects in Scene_1 |
| Scene_2 | Shape_CI | CI class objects in Scene_2 |

Figure 4

EP 4 095 747 A1

S96 — Bounding boxes in Scene_K

S98 — Foreground object score (seen in training)

S94 — 3D Detection

S92 — 3D NN

Scene_K

Figure 5

25

Figure 6

Figure 7

Figure 8

Figure 9

EP 4 095 747 A1

Europäisches
Patentamt

European
Patent Office

Office européen
des brevets

# EUROPEAN SEARCH REPORT

Application Number

EP 21 17 6537

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YANG BO ET AL: "Learning Object Bounding Boxes for 3D Instance Segmentation on Point Clouds", 33RD CONFERENCE ON NEURAL INFORMATION PROCESSING SYSTEMS (NEURIPS 2019), 8 December 2019 (2019-12-08), pages 1-10, XP055861838, * abstract * * section 1; page 2 * * sections 2.1 and 2.2 * * section 2.3 * * figures 4, 7 * * section 3.2 * * section 3.3 * * figure 1 * * figure 2 * | 1-15 | INV. G06K9/62 G06K9/32 G06K9/00 |
| A | GUO YULAN ET AL: "Deep Learning for 3D Point Clouds: A Survey", IEEE TRANSACTIONS ON PATTERN ANALYSIS AND MACHINE INTELLIGENCE, IEEE COMPUTER SOCIETY, USA, vol. 43, no. 12, 29 June 2020 (2020-06-29) , pages 4338-4364, XP011886434, ISSN: 0162-8828, DOI: 10.1109/TPAMI.2020.3005434 [retrieved on 2021-11-02] * section 5.2.1 * | 1-15 | |

TECHNICAL FIELDS SEARCHED (IPC)

G06K

The present search report has been drawn up for all claims

| Place of search | Date of completion of the search | Examiner |
|---|---|---|
| The Hague | 16 November 2021 | Angelopoulou, Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S REN et al.** *Faster R-CNN, Towards real-time object detection with region proposal networks, https://arxiv.org/abs/1506.01497*
- **BOCHKOVSKIY et al.** *YOLOv4: Optimal Speed and Accuracy of Object Detection, https://arxiv.org/abs/2004.10934*
- **QI et al.** *PointNet++: Deep Hierarchical Feature Learning on Point Sets in a Metric Space, https://arxiv.org/abs/1706.02413*
- **QI et al.** *Deep Hough Voting for 3D Object Detection in Point Clouds, https://arxiv.org/abs/1904.09664*

- **TING-I HSIEHE et al.** *One-Shot Object Detection with Co-Attention and Co-Excitation, https://arxiv.org/abs/1911.12529*
- **SERBAN GEORGESCU et al.** *Method and Apparatus for Searching a Database of 3D Items Using Descriptors, shorturl.at/ctCX5*
- **AMEESH MAKADIA et al.** *Methods and Systems for 3D Shape Retrieval, https://patentimages.storage.googleapis.eom/34/b5/25/6307b5a5a20b45/US8606774.p df*
- **XIAOLONG WANG et al.** *Non-local neural networks, https://arxiv.org/abs/1711.07971*